# EUROPEAN PATENT SPECIFICATION

(11) **EP 0 614 339 B1**
(45) Date of publication and mention of the grant of the patent: **17.12.1997**
(21) Application number: 93922095.0
(22) Date of filing: 29.09.1993
(51) Int. Cl.: A47C 27/06, A47C 23/04

(54) **ELASTIC ELEMENTS AND THEIR RESPECTIVE COMPONENTS, MANUFACTURED BY INJECTION IN PLASTIC MATERIAL, NON-METALLIC, TO BE USED IN MATTRESS, CHAIR OR OTHER PURPOSE**
NICHTMETALLISCHE ELASTISCHE ELEMENTE UND DEREN TEILE, HERGESTELLT DURCH KUNSTSTOFF-SPRITZGIESSEN, ZUR VERWENDUNG IN MATRATZEN, STÜHLEN ODER DERGLEICHEN
ELEMENTS ELASTIQUES ET LES COMPOSANTS QUI LEUR SONT ASSOCIES, FABRIQUES PAR INJECTION EN MATERIAU PLASTIQUE NON METALLIQUE, A UTILISER DANS DES MATELAS, DES CHAISES OU AUTRES EQUIPEMENTS SIMILAIRES

(30) Priority: 01.10.1992 PT 10092392
(43) Date of publication of application: 14.09.1994
(73) Proprietor: DIAS MAGALHAES QUEIROZ, Joao Roberto, P-4900 Viana do Castelo (PT)
(72) Inventor: DIAS MAGALHAES QUEIROZ, Joao Roberto, P-4900 Viana do Castelo (PT)
(74) Representative: Pereira da Cruz, Joao
(86) International application number: PCT/PT93/00005
(87) International publication number: WO 94/07395

(56) References cited:
- EP-A- 0 001 469
- EP-A- 0 089 789
- DE-A- 2 015 659
- NL-A- 8 502 589
- US-A- 1 837 847
- US-A- 3 638 254

## Description

The present invention relates to elastic elements and the respective components, which are manufactured by injection of plastic materials and are intended to form the structure of mattresses, chairs and similar objects.

### BACKGROUND TO THE INVENTION

Most known mattresses are manufactured based on a framework of metal springs covered with an adhesive material, such as felt or jute. These traditional mattresses, by virtue of their composition, are heavy, noisy and liable to rust. In the manufacture of mattresses based on a framework of metal springs, there is also another problem which is difficult to resolve - the padding or lining next to the springs, usually felt or jute, so that the person using the mattress does not feel the hardness or unevenness of the wire springs.

Attempts have also been made to manufacture mattresses based on synthetic elements instead of the traditional metal springs.

Thus, there are some documents which describe new processes for manufacturing mattresses or similar objects. DE-A-2015659 describes a mattress or similar object manufactured with layers of springs containing elements which are connected to each other and which are made of synthetic material. NL-A-8502589 relates to support plates and springs.

### OBJECTIVES OF THE INVENTION

The present invention proposes a new frame or structure for a mattress or similar product that is efficient, lightweight, non-degradable by oxidation, is easy to manufacture and does not require specialised personnel to assemble it. This makes it possible to mass produce mattresses at a low cost.

### ABSTRACT

The fundamental basis of a mattress which defines its quality is its frame or structure. It is this base which makes the mattress or similar product a homogenous, solid and elastic whole capable of supporting the human body.

The present invention is essentially characterised by an elastic element of a suitable shape and dimensions, made of a suitable non-metallic plastic material, by injection, and support plates also made of a plastic material obtained by injection, allowing the aforementioned elastic element to be assembled in such a way that the whole can withstand compression.

The resistance, flexibility and strength of this elastic element is identical to a conventional steel wire spring. The abovementioned characteristics of this new elastic element can be altered according to the type of plastic material used.

The abovementioned elastic elements are suitably attached to an upper plate and a lower plate respectively, for example by fitting them together. Furthermore, the support plates are also interconnected using suitable means and are also manufactured by injection in the plastic material. In order to ventilate the structure and save on material, the upper and lower plates are perforated with circular orifices.

The structure or frame of the mattress or similar object consists of a lower and upper covering between which the elastic elements are duly assembled, which have the same function as traditional metal springs. This type of structure is then lined with padding, perhaps a layer of sponge in the shape of the mattress, which is the same shape as traditional mattresses but has characteristics particular to the material that it is made of, for example
- it is non-degradable by oxidation;
- it is very lightweight;
- the elements that constitute the structure are obtained by means of injection in plastic material, allowing them to be mass produced based on a suitable mould;
- it is very easy to assemble without the need for specialised personnel;
- very low costs.

### BRIEF DESCRIPTION OF THE DRAWINGS

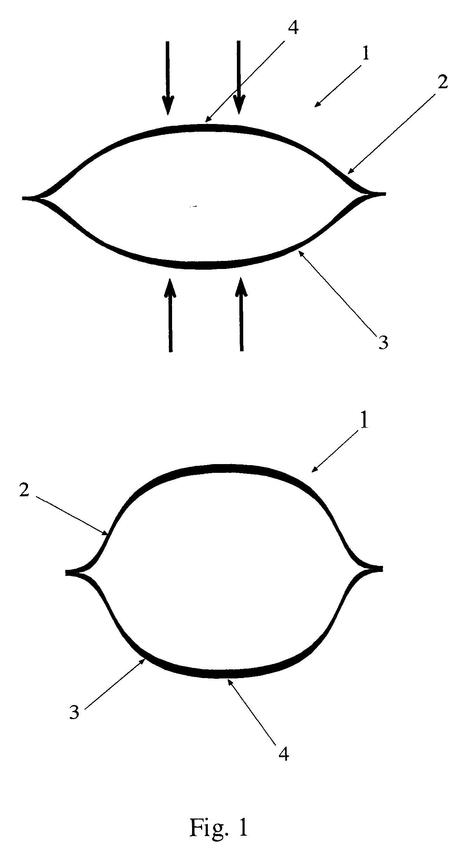

Figure 1 represents a perspective view of the elastic element which is the subject of the invention;

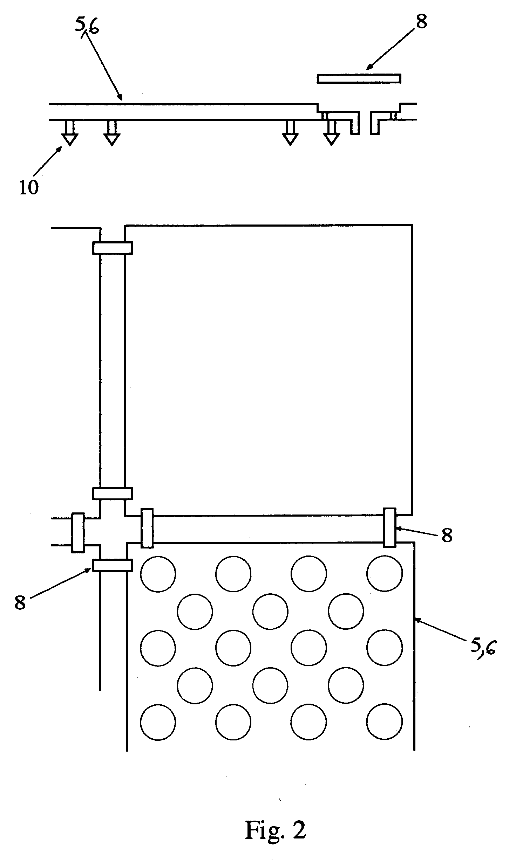

Figure 2 represents a perspective view of the plate which is also the subject of the invention;

### DETAILED DESCRIPTION OF THE INVENTION

As can be seen in the figures attached, the elastic element (1) consists of a single element with an upper part (2) and a lower part (3). Each of the parts (2) and (3) also has a flat area (4). These elastic elements (1) may vary in thickness in order to guarantee different types of resistance and flexibility.

These elements (1) may also have restrictors which limit their path, i.e. elements which limit the elastic deformation of the elastic element (1) within a pre-established range.

The aforementioned support plates, one upper plate (5) and one lower plate (6), are preforated and may have connecting elements (8) and adjacent plates, as can be seen in appropriate dimensions.

The framework of the mattress consists of a suitable number of plates interconnected so as to form an upper and lower covering, which are substantially parallel, with dimensions suitable for the function that they are intended to carry out. As mentioned above, the plates are attached by means of elements (8) which may or may not form part of the plates and can be welded or glued.

An appropriate number of elastic elements (1) are placed between the plates (5) and (6) and are attached to the plates by a suitable means, for example they may be fitted together by means of small pins (10). These elements are placed between the plates in order to achieve a working position that is substantially perpendicular to the plates, with the whole consisting of the support plates/elastic elements being able to withstand compression.

The number of elastic elements to be placed between the support plates depends on the type of mattress or similar object and the flexibility and resistance desired.

The invention should only be considered as being limited by the scope of the following claims.

## Claims

1. Elastic element (1) and the respective upper and lower support plates (5,6), both elastic element and support plates being manufactured by injection moulding of plastic materials and intended to form structures or frames for mattresses or similar objects, characterised in that, said elastic element (1) consists of a single element comprising two parts, an upper part (2) and a lower part (3), each of which parts (2,3) has a flat area (4) in the shape of a flattened arch, through which area (4) the elastic element (1) is connected to said upper (5) and lower (6) support plates by appropriate means such as fixing pins, in order for the elastic element (1) to assume a working position substantially perpendicular to the plane of the support plates (5,6), the structure resulting from the elastic element (1) and associated support plates (5,6) being able to withstand compression, the elastic and resilient capabilities of the resulting structure being varied only by variation of the plastic materials utilised during the manufacturing process by injection moulding.

2. Elastic element and the respective support plates according to claim 1 whereby the abovementioned upper and lower parts may vary in width and/or thickness, in order to ensure different types of flexibility and resistance.

3. Elastic element and the respective support plates according to claim 1 which may also have restrictors which limit their path, i.e. elements which limit the elastic deformation of the elastic element (1) in order to avoid excessive compression.

4. Elastic element and the respective support plates according to claim 1, wherein the support plates (5, 6) comprise orifices that ventilate and air the structure and reduce the weight thereof.

5. Elastic element and the respective support plates according to any of claims 1 to 4, comprising connecting elements for interconnecting the support plates ,consisting of lugs (8) which protrude from the sides of the support plates and allow them to be connected to adjacent plates, these connecting elements either forming or not forming part of the plates and being fitted into place, either by welding or by glueing.

6. Elastic element and the respective support plates according to claim 1, which, when assembled in accordance with any one of the previous claims with an appropriate number of elements and plates, form structures or frames for mattresses or similar objects, which have a parallel upper and a lower covering consisting of a suitable number of support plates, between which a suitable number of elastic elements are assembled depending on the desired flexibility and resistance.

## Patentansprüche

1. Elastisches Bauteil und die entsprechenden oberen und unteren Stützeinlagen (5,6), beide, elastisches Bauteil und Stützeinlagen, werden durch Plastikeinspritzverfahren hergestellt und dienen zur Bildung von Strukturen oder Rahmen von Matratzen bzw. ähnlichen Gegenständen. Charakteristisch für das genannte elastische Bauteil (1) ist, daß es aus einem Einzelelement besteht, welches zwei Teile umfaßt, ein Ober- (2) und ein Unterteil (3). Jedes dieser Teile (2,3) hat einen abgeflachten Bereich in Form eines Flachbogens. Durch diesen Bereich (4) werden die elastischen Bauteile (1) mit den genannten oberen (5) und unteren (6) Stützeinlagen verbunden. Dieses geschieht durch geeignete Mittel wie z.B. Pins, so daß die elastischen Bauteile (1) in senkrechter Position zu den Abflachungen der Stützeinlagen (5,6) befestigt werden. Die elastischen Bauteile (1) in Verbindung mit den Stützeinlagen (5,6) ergeben somit eine druckwiderstandsfähige Struktur. Die Eigenschaften dieser Struktur hinsichtlich Elastizität und Spannkraft können über die Variierung des benutzten Plastiks während deren Herstellung im Einspritzverfahren wahlweise beeinflußt werden.

2. Elastisches Bauteil und die entsprechenden Stützeinlagen gemäß Forderung 1, wobei zuvor genannte Ober- und Unterteile in Breite und Dicke variieren können, um unterschiedlichen Elastizitäts- Widerstandsansprüchen gerecht werden zu können.

3. Elastisches Bauteil und entsprechende Stützeinlagen gemäß Forderung 1, welche auch über Zusatzteile verfügen können, die das Zusammendrücken der elastischen Bauteile erschweren, die Verformung der elastischen Bauteile (1) begrenzen und damit ein übermäßiges Zusammendrücken vermeiden.

4. Elastisches Bauteil und entsprechende Stützeinlagen gemäß Forderung 1, wobei die Stützeinlagen (5,6) zwecks Lüftung und Gewichtsersparnis gelocht sind.

5. Elastisches Bauteil und entsprechende Stützeinlagen hinsichtlich der Forderungen 1 bis 4, wobei diese Verbindungsteile zur Untereinanderverbindung der Stützeinlagen enthalten. Diese Verbindungsteile bestehen aus Ösen (8), die an den Seiten der Stützeinlagen abstehen und ein Verbinden mit der nächsten Stützeinlage ermöglichen. Diese Verbindungsteile, betrachtet man sie als Teil der Stützeinlage oder nicht, können durch Schmelzen oder Kleben befestigt werden.

6. Elastisches Bauteil und entsprechende Stützeinlagen gemäß Forderung 1, bilden, vorausgesetzt sie 'werden wie in den vorangegangenen Forderungen aus einer geeigneten Anzahl von Bauteilen und Einlagen zusammengesetzt, Strukturen bzw. Rahmen für Matratzen oder ähnliche Gegenstände. Sie haben parallel zueinander verlaufende Ober- und Unterseiten bestehend aus einer geeigneten Menge von Stützeinlagen, zwischen denen eine angemessene Anzahl von elastischen Bauteilen eingesetzt wird; in Abhängigkeitt von der gewünschten Flexibilität und Widerstandsfähigkeit.

## Revendications

1. Les éléments élastiques (1) et les respectives plaques d'appui supérieure et inférieure (5,6) sont fabriqués à l'aide d'un moule d'injection en matériel plastique, de façon à obtenir des structures, des châssis ou des carcasses pour des matelas ou des objects similaires. La caractérisation de ces éléments élastiques (2) consiste en un élément simple, composé de deux parties, une partie supérieure (2) et une partie inférieure (3). Chacune de ces parties (2,3) a une partie plane (4) en forme d'arc aplati. C'est à travers cette aire (4) que l'élément élastique (1) est lié à l'appui supérieur (5) et inférieur (6) des plaques par des moyens appropriés comme des épingles fixes, afin de permettre à l'élément d'assumer une position de travail substantiellement perpendiculaire au plan des plaques d'appui (5,6). La structure résultant des éléments élastiques (1) et des plaques d'appui unis (5,6) est capable de supporter la compression, et les capacités élastiques et énergiques de cette structure peuvent varier par la variation du matériel utilisé pendant le procédé de fabrication par moule d'injection.

2. Les éléments élastiques et les respectives plaques d'appui selon la revendication 1, unissant les parties supérieure et inférieure mentionnées ci-dessus, peuvent varier en largeur et en épaisseur, afin de garantir de différents types de flexibilité et de résistance.

3. Les éléments élastiques et les respectives plaques d'appui, selon la revendication 1, peuvent également avoir des limitations qui limitent leurs trajets, c'est-à-dire des éléments qui limitent la déformation élastique des éléments élastiques (1), afin d'eviter une compression excessive.

4. Les éléments et les respectives plaques d'appui, selon la revendication 1, d'où les plaques d'appui (5,6) comprennent des orifices qui ventilent et aérent la structure et par conséquent réduisent le poids.

5. Les éléments élastiques et les respectives plaques d'appui, selon n'importe laquelle des revendications 1 à 4, comprenant les éléments unis par la liaison des plaques d'appui, consistent en des moyens (8) qui font saillir les côtés des plaques d'appui et leur permet d'être liés aux plaques adjacentes. Ces éléments de liaison, qu'ils forment ou non partie des plaques, sont mis en place par jointure, par soudure ou par collage.

6. Les éléments élastiques et les respectives plaques d'appui, selon la revendication 1, quand ils sont unis selon n'importe laquelle des revendications, avec un nombre approprié d'éléments élastiques et de plaques, forment des structures, des châssis ou des carcasses pour des matelas ou des objects similaires, qui ont une couverture supérieure ou inférieure parallèle, consistant en un nombre approprié de plaques d'appui, parmi lesquelles, il y a un nombre approprié d'éléments élastiques selon la flexibilité et la résistance désirées.
